Europäisches Patentamt

European Patent Office

Office européen des brevets

(11) Publication number: **0 488 177 A2**

# EUROPEAN PATENT APPLICATION

(21) Application number: **91120196.0**

(22) Date of filing: **26.11.91**

(51) Int. Cl.⁵: **G06K 19/08**, G06K 7/12

(30) Priority: **27.11.90 JP 328691/90**
**27.11.90 JP 328689/90**

(43) Date of publication of application:
**03.06.92 Bulletin 92/23**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Suzuki, Tomoko, (Nee Abe)**
**1-11-10, Sugebanba, Tama-ku**
**Kawasaki(JP)**
Inventor: **Nakajima, Masato**
**4-4, Mita, Tama-ku**
**Kawasaki(JP)**

(74) Representative: **Pellmann, Hans-Bernd, Dipl.-Ing.**
**Patentanwaltsbüro Tiedtke-Bühling-Kinne & Partner, Bavariaring 4**
**W-8000 München 2(DE)**

(54) **Bar code system.**

(57) In a bar code system, a bar code label has first and second bar code symbols. The first bar code symbol is sensible by light having a first predetermined wavelength but is insensible by light having a second predetermined wavelength. The second bar code symbol is sensible by light having the second predetermined wavelength but is insensible by light having the first predetermined wavelength. A device generates light having a wavelength which periodically changes between the first predetermined wavelength and the second predetermined wavelength. The generated light is applied to the bar code label. A portion of the applied light is reflected at the bar code label and the reflected portion of the light forms return light. Contents of the first and second bar code symbols are detected in response to the return light.

FIG. 4

## BACKGROUND OF THE INVENTION

This invention relates to a bar code system which includes a bar code reader for extracting information from bar code labels.

Bar code systems include a bar code reader for extracting information from bar code labels. The bar code labels are generally attached to articles or products respectively. Each bar code label has a bar code symbol representing information for identifying the related article. In general, the bar code reader optically scans the bar code label to read out the information therefrom.

As will be explained later, a prior art bar code system has some problem.

## SUMMARY OF THE INVENTION

It is an object of this invention to provide an improved bar code system.

A first aspect of this invention provides a bar code system comprising a bar code label having first and second bar code symbols, wherein the first bar code symbol is sensible by light having a first predetermined wavelength but is insensible by light having a second predetermined wavelength, and wherein the second bar code symbol is sensible by light having the second predetermined wavelength but is insensible by light having the first predetermined wavelength; means for oscillating light having a wavelength which periodically changes between the first predetermined wavelength and the second predetermined wavelength; means for applying the generated light to the bar code label, wherein a portion of the applied light is reflected at the bar code label and the reflected portion of the light forms return light; and means for detecting contents of the first and second bar code symbols in response to the return light.

A second aspect of this invention provides a bar code system comprising a bar code label having first and second bar code symbols, wherein the first bar code symbol is sensible by light having a first predetermined wavelength but is insensible by light having a second predetermined wavelength, and wherein the second bar code symbol is sensible by light having the second predetermined wavelength but is insensible by light having the first predetermined wavelength; means for periodically applying pulses of first light of the first predetermined wavelength to the bar code label, wherein a portion of the applied first light is reflected at the bar code label and the reflected portion of the first light forms a first return light; means for periodically applying pulses of second light of the second predetermined wavelength to the bar code label, wherein a portion of the applied second light is reflected at the bar code label and the reflected portion of the second light forms a second return light; means for staggering a timing of occurrence of the pulses of the first light and a timing of occurrence of the pulses of the second light; and means for detecting contents of the first and second bar code symbols in response to the first return light and the second return light.

## BRIEF DESCRIPTION OF THE DRAWINGS

Fig. 1 is a diagram of a bar code label and a transmitter section of a prior art bar code reader.

Fig. 2 is a diagram of a bar code label and a receiver section of the prior art bar code reader.

Fig. 3 is a diagram of a prior art bar code symbol.

Fig. 4 is a diagram of a bar code system according to a first embodiment of this invention.

Fig. 5 is a perspective view, partially in section, of the light-emitting element of Fig. 4.

Fig. 6 is a time-domain diagram showing drive voltage pulses and current pulses fed to the light-emitting element of Figs. 4 and 5.

Fig. 7 is a diagram of the wavelength-controlling power supply of Fig. 4.

Fig. 8 is a diagram of a bar code symbol on the bar code label of Fig. 4.

Fig. 9 is a diagram showing the relation between reflectivity and colors with respect to light having a wavelength in the range of 550 to 750 nm.

Figs. 10-12 are diagrams of modified bar code symbols.

Fig. 13 is a diagram of a bar code system according to a second embodiment of this invention.

Fig. 14 is a time-domain diagram showing drive voltage pulses fed to the light-emitting elements of Fig. 13.

## DESCRIPTION OF THE PRIOR ART

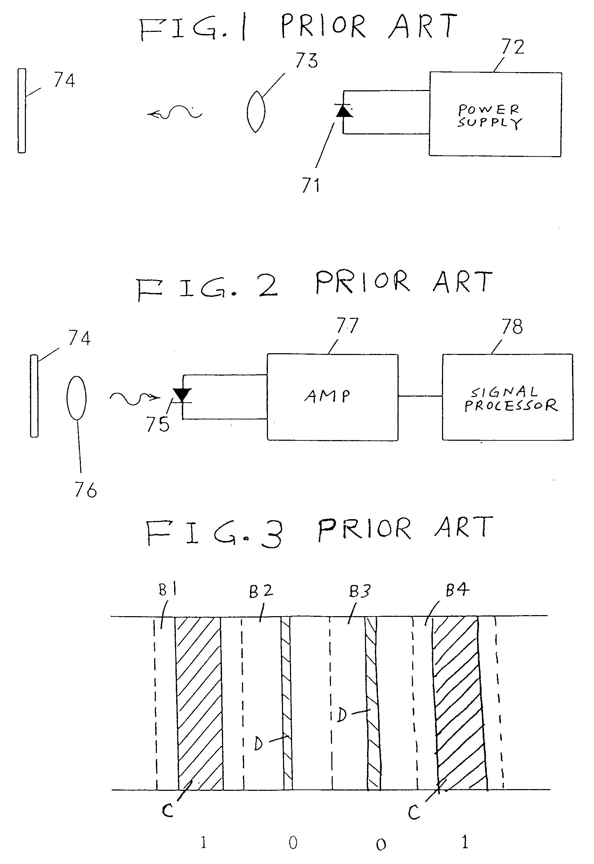

With reference to Fig. 1, a transmitter section of a prior art bar code reader includes a light-emitting element 71 such as a laser or a light-emitting diode, a power supply 72, and a lens 73. The light-emitting element 71 is driven by the power supply 72, emitting a beam of light. The emitted light beam passes through the lens 73, being applied to a bar code label 74 attached on an article.

As shown in Fig. 2, a receiver section of the prior art bar code reader includes a photodetector 75, a lens 76, an amplifier 77, and a signal processor 78. The light beam applied to the bar code label 74 from the transmitter section of the prior art bar code reader is reflected at the bar code label 74, forming a return light beam containing information represented by a bar code symbol on the bar code label 74. The return light beam passes through the lens 76, being applied to the photodetector 75. The return light beam is converted by the photodetector 75 into a corresponding electric signal which is fed to the signal processor 78 via the amplifier 77. The electric signal contains the bar code information. The signal processor 78 detects the amplitude of the input electric signal, deriving the bar code information from the input electric signal.

As shown in Fig. 3, the bar code symbol 74A on the bar code label 74 has an elongated region divided into a sequence of equal-size segments B1, B2, B3, ..., Bn. Each of the segments B1, B2, B3, ..., Bn can assume one of first and second states. In the first state, the segment has a thick black stripe C with a white background. In the second state, the segment has a thin black stripe D with a white background. The first and second states correspond to logic "1" and "0" respectively. In this way, each of the segments B1, B2, B3, ..., Bn represents 1-bit information.

The segments B1, B2, B3, ..., Bn of the bar code symbol 74A are sequentially scanned by the light beam. During the scanning process, a segment being in the first state (the "1" state), that is, a segment having a thick black stripe C, reflects the light beam at a low rate while a segment in the second state (the "0" state), that is, a segment having a thin black stripe D, reflects the light beam at a high rate. Thus, the intensity of the return light depends on the state of a segment, and the amplitude of the corresponding electric signal depends on the state of the segment. As described previously, the signal processor 78 detects the amplitude of the electric signal, deriving the bar code information from the electric signal.

When the bar code symbol 74A is required to represent a great amount of information, the bar code symbol 74A tends to be excessively long. In some cases, the bar code symbol 74A needs to include a parallel arrangement of elongated regions each having a sequence of equal-size segments. In these cases, the bar code reader tends to spend a long time to derive whole information from the bar code symbol 74A.

## DESCRIPTION OF THE FIRST PREFERRED EMBODIMENT

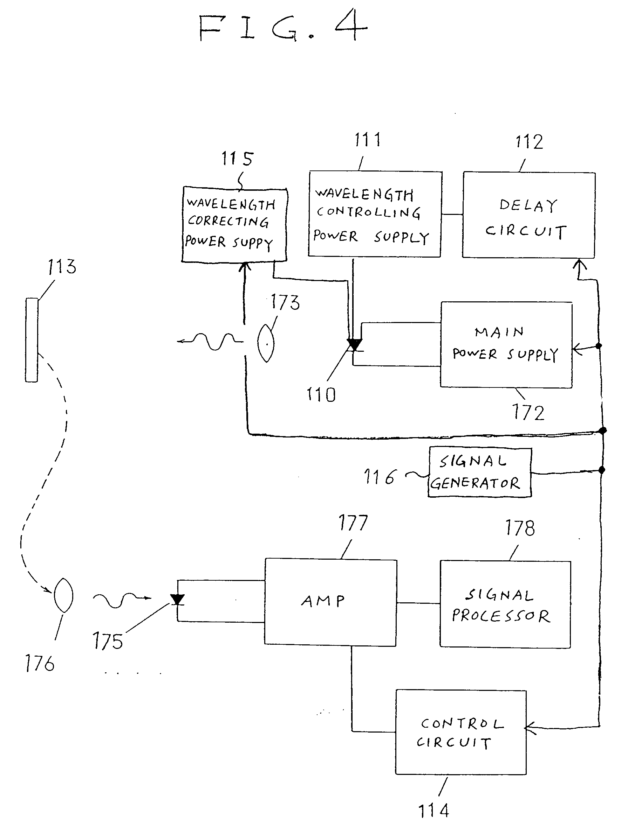

With reference to Fig. 4, a transmitter section of a bar code reader includes a variable-wavelength light-emitting element 110, a wavelength-controlling power supply 111, a delay circuit 112, a wavelength-correcting power supply 115, a main power supply 172, and a lens 173. The light-emitting element 110 is driven by the main power supply 172 and is controlled by the wavelength-controlling power supply 111 and the wavelength-correcting power supply 115, periodically and alternately emitting a pulse beam of light having a first predetermined wavelength and a pulse beam of light having a second predetermined wavelength. The first and second predetermined wavelengths are preferably equal to 560 nm and 680 nm respectively. It should be noted that the first and second predetermined wavelengths may be equal to other values. The emitted light beams pass through the lens 173, being applied to a bar code label 113 attached on an article.

A receiver section of the bar code reader includes a control circuit 114, a photodetector 175, a lens 176, an amplifier 177, and a signal processor 178. The light beams applied to the bar code label 113 from the transmitter section of the bar code reader are reflected at the bar code label 113, forming return light beams containing information represented by a bar code symbol on the bar code label 113. The return light beams pass through the lens 176, being applied to the photodetector 175. The return light beams are converted by the photodetector 175 into corresponding electric signals which are fed to the signal processor 178 via the amplifier 177. The electric signals contain the bar code information. The signal processor 178 detects the amplitude or the level of each of the input electric signals, deriving the bar code information from the input electric signals.

The bar code reader includes a signal generator 116 which outputs a reference timing signal of a predetermined frequency to the main power supply 172 and the control circuit 114. The main power supply 172 periodically drives the light-emitting element 110 at timings depending on the reference timing signal, so that the light-emitting element 110 outputs light beam pulses at timings depending on the reference timing signal. The control circuit 114 selectively enables and disables the amplifier 177 in response to the reference timing signal so that enabling the amplifier 177 will be essentially synchronized with the periodical drive of the light-emitting element 110.

The light-emitting element 110 includes a variable-wavelength semiconductor laser 110A of the current injection type. As shown in Fig. 5, the semiconductor laser 110A includes a lamination of a waveguide layer 201, a buffer layer 202, and an active layer 203 epitaxially grown on a substrate. The semiconductor laser 110A also has a current injection layer which is basically separated into an active region 205, a phase control region 206, and a distributed Blagg reflection region (a DBR region) 207. The semiconductor laser 110 emits a beam of light under conditions where a wavelength correcting current Ia, a phase control current Ip, and a wavelength varying current Id are injected into the active region 205, the phase control region 206, and the DBR region 207 of the current injection layer respectively. The laser oscillation wavelength depends on the wavelength varying current Id so that the wavelength of the output laser light beam depends on the wavelength varying current Id.

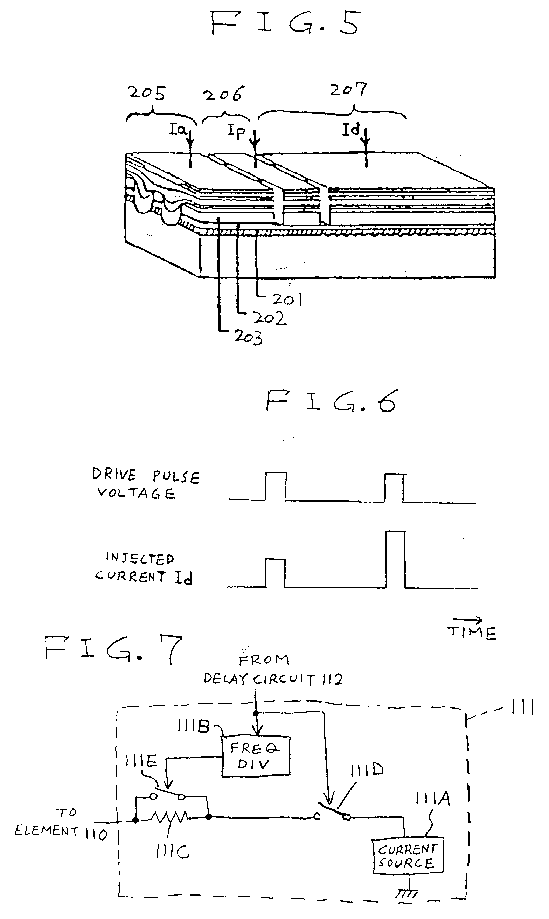

The main power supply 172 generates drive pulses of a predetermined frequency in response to the output reference timing signal from the signal generator 116. The output drive pulses from the main power supply 172 are fed to the light-emitting element 110 so that pulses of the phase control current Ip will be injected into the light-emitting element 110. The output drive pulses from the main power supply 172 have a waveform such as shown in Fig. 6.

The delay circuit 112 receives the reference timing signal from the signal generator 116, and delays the reference timing signal. The wavelength-controlling power supply 111 generates pulses of the wavelength varying current Id in response to an output timing signal from the delay circuit 112. The pulses of the wavelength varying current Id are injected into the light-emitting element 110. The pulses of the wavelength varying current Id have a waveform such as shown in Fig. 6. The delay circuit 112 serves to ensure that the timings of the pulses of the wavelength varying current Id essentially agree with the timings of the pulses of the phase control current Ip.

As shown in Fig. 7, the wavelength-controlling power supply 111 includes a current source 111A, a frequency divider 111B, a resistor 111C, and switches 111D and 111E. The current source 11A, the switch 111D, and the resistor 111C are made into a series combination connected to the light-emitting element 110. The switch 111E is connected across the resistor 111C. The switch 111D is periodically closed and opened by the output timing signal from the delay circuit 112. The frequency divider 111B halves the frequency of the output timing signal from the delay circuit 112, and generates a second timing signal on the basis of the output timing signal from the delay circuit 112. The switch 111E is periodically closed and opened by the output timing signal from the frequency divider 111B. Pulses of the output timing signal from the frequency divider 111B occur synchronously with alternate pulses of the output timing signal from the delay circuit 112.

The wavelength-controlling power supply 111 operates as follows. A first pulse of the output timing signal from the delay circuit 112 closes the switch 111D. During the presence of the first pulse of the output timing signal from the delay circuit 112, a pulse of the output timing signal from frequency divider 111B is absent so that the switch 111E remains open. In this case, the resistor 111C is effective, and thus the wavelength-varying current Id with a small level is fed from the current source 111A to the light-emitting element 110. A second pulse (a pulse subsequent to the first pulse) of the output timing signal from the delay circuit 112 also closes the switch 111D. During the presence of the second pulse of the output timing signal from the delay circuit 112, a pulse of the output timing signal from the frequency divider 111B is present so that the switch 111E is closed. In this case, the resistor 111C is short-circuited, and thus the wavelength-varying current Id with a large level is fed from the current source 111A to the light-emitting element 110. Such processes are periodically reiterated. Consequently, as shown in Fig. 6, the alternation of small pulses and large pulses of the wavelength-varying current Id is fed to the light-emitting element 110.

The light-emitting element 110 outputs the beam of light of the first predetermined wavelength in response to the small pulse of the wavelength-varying current Id. The light-emitting element 110 outputs the beam of light of the second predetermined wavelength in response to the large pulse of the wavelength-varying current Id. The first and second predetermined wavelengths are equal to 560 nm and 680 nm respectively.

The wavelength-correcting power supply 115 receives the reference timing signal from the signal generator 116, and generates the wavelength correcting current Ia in response to the reference timing signal. The wavelength correcting current Ia is injected into the light-emitting element 110. The wavelength correcting current Ia is used in fixing the wavelength of the output light from the light-emitting element 110 at the first or second predetermined wavelength.

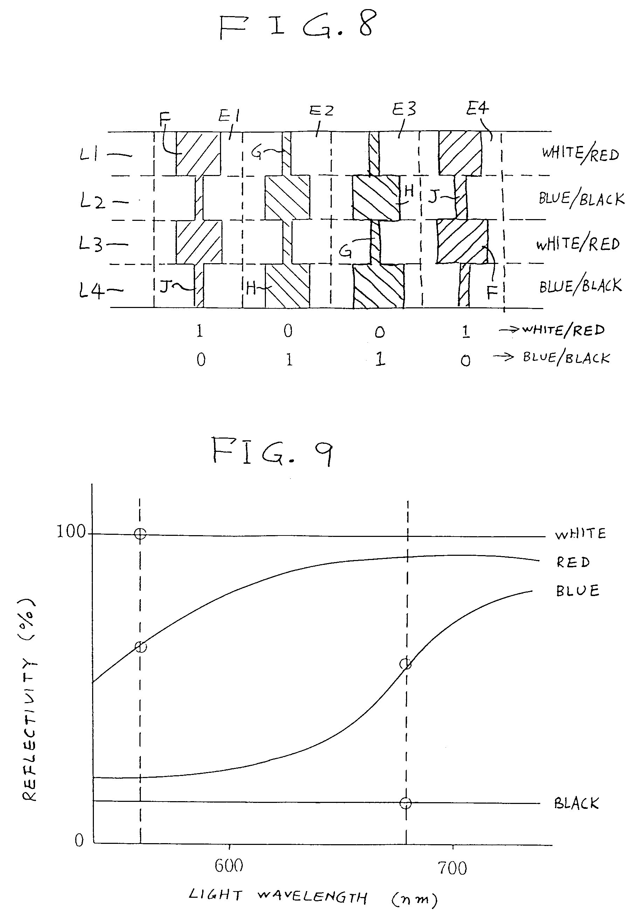

As shown in Fig. 8, the bar code symbol 113A on the bar code label 113 has an elongated region composed of four sub elongated regions L1, L2, L3, and L4 each divided into a sequence of equal-size segments E1, E2, E3, ..., En. The sub elongated regions L1-L4 are simultaneously scanned by the light beam emitted from the light-emitting element 110. The sub elongated regions L1 and L3 are equal. The sub elongated regions L2 and L4 are equal. The bar code symbol 113A is separated into first and second sub bar code symbols, and the first sub bar code symbol is represented by each of the sub elongated regions L1 and L3 and the second sub bar code symbol is represented by each of the sub elongated regions L2 and L4.

In the sub elongated regions L1 and L3, each of the segments E1, E2, E3, ..., En can assume one of first and second states. In the first state, the segment has a thick red stripe F with a white background. In the second state, the segment has a thin red stripe G with a white background. The first and second states correspond to logic "1" and "0" respectively. In this way, each of the segments E1, E2, E3, ..., En of the sub elongated regions L1 and L3 represents 1-bit information.

In the sub elongated regions L2 and L4, each of the segments E1, E2, E3, ..., En can assume one of first and second states. In the first state, the segment has a thick black stripe H with a blue background. In the second state, the segment has a thin black stripe J with a blue background. The first and second states correspond to logic "1" and "0" respectively. In this way, each of the segments E1, E2, E3, ..., En of the sub elongated regions L2 and L4 represents 1-bit information.

As shown in Fig. 9, black, blue, red, and white provide different reflectivities for light having a wavelength in a predetermined range. Specifically, black provides a lowest reflectivity. Blue provides a second lowest reflectivity. Red provides a second highest reflectivity. White provides a highest reflectivity. In addition, the reflectivities provided by black, blue, red, and white depend on the wavelength of light.

As shown in Fig. 9, white and red provide much different reflectivities but blue and black provide approximately equal reflectivities for light having a wavelength of 560 nm. Accordingly, information on the white/red sub elongated regions L1 and L3 of the bar code symbol 113A can be sensed by the light beam of the first predetermined wavelength, that is, 560 nm while information on the blue/black sub elongated regions L2 and L4 of the bar code symbol 113A can not be sensed by the light beam. On the other hand, white and red provide approximately equal reflectivities but blue and black provide much different reflectivities for light having a wavelength of 680 nm. Accordingly, information on the blue/black sub elongated regions L2 and L4 of the bar code symbol 113A can be sensed by the light beam of the second predetermined wavelength, that is, 680 nm while information on the white/red sub elongated regions L1 and L3 of the bar code symbol 113A can not be sensed by the light beam.

The segments E1, E2, E3, ..., En of the bar code symbol 113A are sequentially scanned by the pulse 560-nm light beam and the pulse 680-nm light beam. During the scanning process, in the white/red sub elongated regions L1 and L3 of the bar code symbol 113A, a segment being in the first state (the "1" state), that is, a segment having a thick red stripe F, reflects the 560-nm light beam at a low rate. A segment in the second state (the "0" state), that is, a segment having a thin red stripe G, reflects the 560-nm light beam at a high rate. Thus, the intensity of the return 560-nm light depends on the state of a segment, and the amplitude or the level of the corresponding electric signal depends on the state of the segment. The signal processor 178 detects the amplitude or the level of the electric signal, deriving the bar code information from the electric signal in connection with the white/red sub elongated regions L1 and L3 of the bar code symbol 113A. In addition, during the scanning process, in the blue/black sub elongated regions L2 and L4 of the bar code symbol 113A, a segment being in the first state (the "1" state), that is, a segment having a thick black stripe H, reflects the 680-nm light beam at a low rate. A segment in the second state (the "0" state), that is, a segment having a thin black stripe J, reflects the 680-nm light beam at a high rate. Thus, the intensity of the return 680-nm light depends on the state of a segment, and the amplitude or the level of the corresponding electric signal depends on the state of the segment. The signal processor 178 detects the amplitude or the level of the electric signal, deriving the bar code information from the electric signal in connection with the blue/black sub elongated regions L2 and L4 of the bar code symbol 113A.

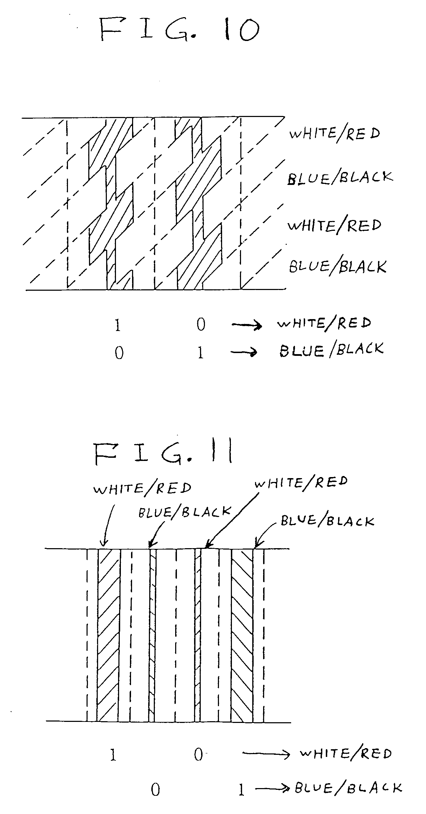

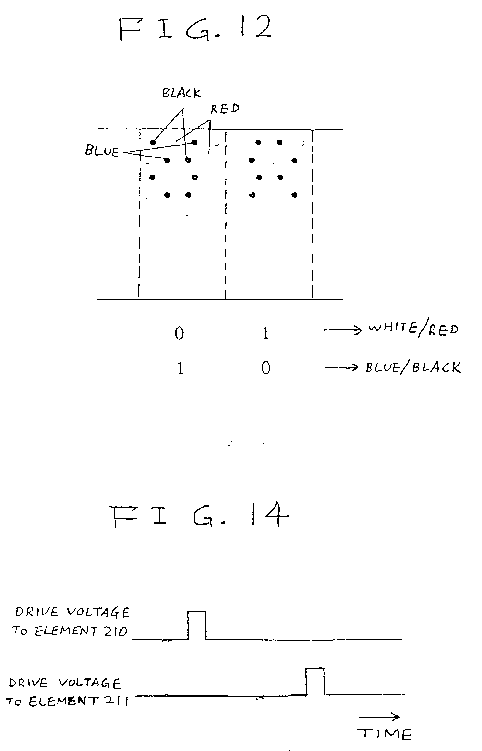

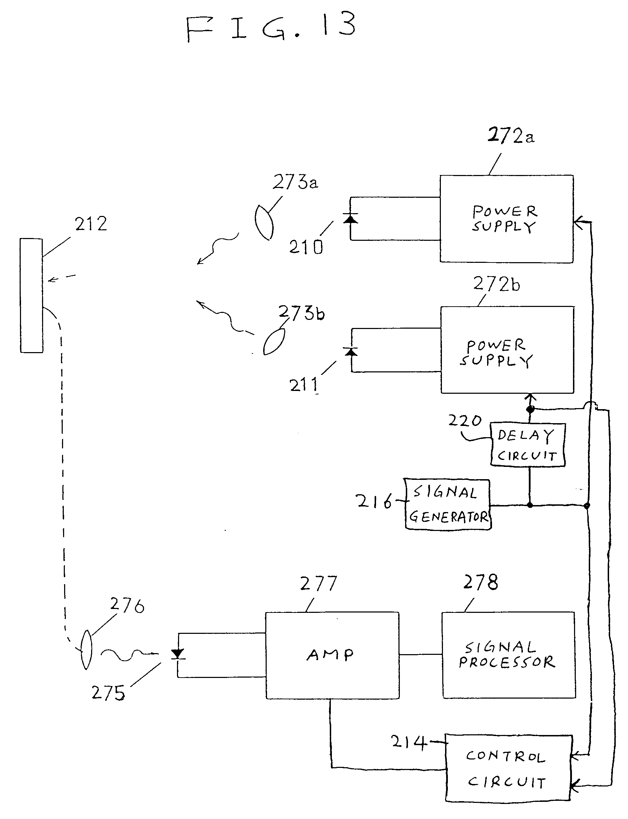

The bar code label 113 may be modified in various ways. According to a first modification, as shown in Fig. 10, a bar code label has separate inclined regions. According to a second modification, as shown in Fig. 11, a bar code label has the alternation of white/red segments and blue/black segments. According to a third modification, as shown in Fig. 12, a bar code label contains dots of different colors.

## DESCRIPTION OF THE SECOND PREFERRED EMBODIMENT

With reference to Fig. 13, a transmitter section of a bar code reader includes first and second light light-emitting elements 210 and 211, first and second power supplies 272a and 272b, and first and second lens 273a and 273b. The first light-emitting element 210 is driven by the first power supply 272a, periodically emitting a pulse beam of light having a first predetermined wavelength. The emitted light beam passes through the first lens 273a, being applied to a bar code label 212 attached on an article. The second light-emitting element 211 is driven by the second power supply 272b, periodically emitting a pulse beam of light having a second predetermined wavelength. The emitted light beam passes through the second lens 273b, being applied to the bar code label 212. The first and second predetermined wavelengths are preferably equal to 560 nm and 680 nm respectively. It should be noted that the first and second predetermined wavelengths may be equal to other values. The first and second light-emitting elements include semiconductor lasers or other suitable devices.

A receiver section of the bar code reader includes a control circuit 214, a photodetector 275, a lens 276, an amplifier 277, and a signal processor 278. The light beams applied to the bar code label 212 from the transmitter section of the bar code reader are reflected at the bar code label 212, forming return light beams containing information represented by a bar code symbol on the bar code label 212. The return light beams pass through the lens 276, being applied to the photodetector 275. The return light beams are converted by the photodetector 275 into corresponding electric signals which are fed to the signal processor 278 via the amplifier 277. The electric signals contain the bar code information. The signal processor 278 detects the amplitude or the level of each of the input electric signals, deriving the bar code information from the input electric signals.

The bar code reader includes a signal generator 216 which outputs a reference timing signal of a predetermined frequency to the first power supply 272a, the control circuit 214, and a delay circuit 220. The delay circuit 220 delays the reference timing signal, generating a second reference timing signal. The output timing signal from the delay circuit 220 is fed to the second power supply 272b and the control circuit 214. The first power supply 272a periodically generates first drive pulses in response to the output timing signal from the signal generator 216, and feeds the first drive pulses to the first light-emitting element 210 to periodically activate the first light-emitting element 210. The second power supply 272b periodically generates second drive pulses in response to the output timing signal from the delay circuit 220, and feeds the second drive pulses to the second light-emitting element 211 to periodically activate the second light-emitting element 211. As shown in Fig. 14, the first drive pulses fed to the first light-emitting element 210 are offset in timing with respect to the second drive pulses fed to the second light-emitting element 211. In other words, the timing of the feed of the first drive pulses and the timing of the feed of the second drive pulses are staggered. This timing offset is provided by the delay circuit 220. As described previously, the control circuit 214 receives the timing signals from the signal generator 216 and the delay circuit 220. The control circuit 214 selectively enables and disables the amplifier 277 in response to the received timing signals so that enabling the amplifier 277 will be essentially synchronized with the periodical drive of the first and second light-emitting elements 210 and 211.

The bar code symbol on the bar code label 212 has a design similar to the design of the bar code symbol 113A of Fig. 8. The bar code symbol on the bar code label 212 will now be described with reference to Fig. 8 for convenience' sake. The bar code symbol has an elongated region composed of four sub elongated regions L1, L2, L3, and L4 each divided into a sequence of equal-size segments E1, E2, E3, ..., En. The sub elongated regions L1-L4 are simultaneously scanned by the light beam emitted from the first light-emitting element 210. In addition, the sub elongated regions L1-L4 are simultaneously scanned by the light beam emitted from the second light-emitting element 211. The sub elongated regions L1 and L3 are equal. The sub elongated regions L2 and L4 are equal. The bar code symbol is separated into first and second sub bar code symbols, and the first sub bar code symbol is represented by each of the sub elongated regions L1 and L3 and the second sub bar code symbol is represented by each of the sub elongated regions L2 and L4.

In the sub elongated regions L1 and L3, each of the segments E1, E2, E3, ..., En can assume one of first and second states. In the first state, the segment has a thick red stripe F with a white background. In the second state, the segment has a thin red stripe G with a white background. The first and second states correspond to logic "1" and "0" respectively. In this way, each of the segments E1, E2, E3, ..., En of the sub elongated regions L1 and L3 represents 1-bit information.

In the sub elongated regions L2 and L4, each of the segments E1, E2, E3, ..., En can assume one of first and second states. In the first state, the segment has a thick black stripe H with a blue background. In the second state, the segment has a thin black stripe J with a blue background. The first and second states correspond to logic "1" and "0" respectively. In this way, each of the segments E1, E2, E3, ..., En of the sub elongated regions L2 and L4 represents 1-bit information.

As shown in Fig. 9, black, blue, red, and white provide different reflectivities for light having a wavelength in a predetermined range. Specifically, black provides a lowest reflectivity. Blue provides a second lowest reflectivity. Red provides a second highest reflectivity. White provides a highest reflectivity. In addition, the reflectivities provided by black, blue, red, and white depend on the wavelength of light.

As shown in Fig. 9, white and red provide much different reflectivities but blue and black provide approximately equal reflectivities for light having a wavelength of 560 nm. Accordingly, information on the white/red sub elongated regions L1 and L3 of the bar code symbol can be sensed by the light beam of the first predetermined wavelength, that is, 560 nm while information on the blue/black sub elongated regions L2 and L4 of the bar code symbol can not be sensed by the light beam. On the other hand, white and red provide approximately equal reflectivities but blue and black provide much different reflectivities for light having a wavelength of 680 nm. Accordingly, information on the blue/black sub elongated regions L2 and L4 of the bar code symbol can be sensed by the light beam of the second predetermined wavelength, that is, 680 nm while information on the white/red sub elongated regions L1 and L3 of the bar code symbol can not be sensed by the light beam.

The segments E1, E2, E3, ..., En of the bar code symbol are sequentially scanned by the pulse 560-nm light beam and the pulse 680-nm light beam which are emitted from the first and second light-emitted elements 210 and 211 respectively. During the scanning process, in the white/red sub elongated regions L1 and L3 of the bar code symbol, a segment being in the first state (the "1" state), that is, a segment having a thick red stripe F, reflects the 560-nm light beam at a low rate. A segment in the second state (the "0" state), that is, a segment having a thin red stripe G, reflects the 560-nm light beam at a high rate. Thus, the intensity of the return 560-nm light depends on the state of a segment, and the amplitude or the level of the corresponding electric signal depends on the state of the segment. The signal processor 178 detects the amplitude or the level of the electric signal, deriving the bar code information from the electric signal in connection with the white/red sub elongated regions L1 and L3 of the bar code symbol. In addition, during the scanning process, in the blue/black sub elongated regions L2 and L4 of the bar code symbol, a segment being in the first state (the "1" state), that is, a segment having a thick black stripe H, reflects the 680-nm light beam at a low rate. A segment in the second state (the "0" state), that is, a segment having a thin black stripe J, reflects the 680-nm light beam at a high rate. Thus, the intensity of the return 680-nm light depends on the state of a segment, and the amplitude or the level of the corresponding electric signal depends on the state of the segment. The signal processor 278 detects the amplitude or the level of the electric signal, deriving the bar code information from the electric signal in connection with the blue/black sub elongated regions L2 and L4 of the bar code symbol.

The bar code label 212 may be modified in various ways. According to a first modification, as shown in Fig. 10, a bar code label has separate inclined regions. According to a second modification, as shown in Fig. 11, a bar code label has the alternation of white/red segments and blue/black segments. According to a third modification, as shown in Fig. 12, a bar code label contains dots of different colors.

In a bar code system, a bar code label has first and second bar code symbols. The first bar code symbol is sensible by light having a first predetermined wavelength but is insensible by light having a second predetermined wavelength. The second bar code symbol is sensible by light having the second predetermined wavelength but is insensible by light having the first predetermined wavelength. A device generates light having a wavelength which periodically changes between the first predetermined wavelength and the second predetermined wavelength. The generated light is applied to the bar code label. A portion of the applied light is reflected at the bar code label and the reflected portion of the light forms return light. Contents of the first and second bar code symbols are detected in response to the return light.

## Claims

1. A bar code system comprising:
   a bar code label having first and second bar code symbols, wherein the first bar code symbol is sensible by light having a first predetermined wavelength but is insensible by light having a second predetermined wavelength, and wherein the second bar code symbol is sensible by light having the second predetermined wavelength but is insensible by light having the first predetermined wavelength;
   means for oscillating light having a wavelength which periodically changes between the first predetermined wavelength and the second predetermined wavelength;
   means for applying the generated light to the bar code label, wherein a portion of the applied light is reflected at the bar code label and the reflected portion of the light forms return light; and
   means for detecting contents of the first and second bar code symbols in response to the return light.

2. The bar code system of claim 1 wherein the first bar code symbol includes red stripes with a white background and the second bar code symbols includes black stripes with a blue background, and the first and second predetermined wavelengths are equal to 560 nm and 680 nm respectively.

3. The bar code system of claim 1 wherein the light-generating means comprises a variable-wavelength semiconductor laser.

4. A bar code system comprising:
   a bar code label having first and second bar code symbols, wherein the first bar code symbol is sensible by light having a first predetermined wavelength but is insensible by light having a second predetermined wavelength, and wherein the second bar code symbol is sensible by light having the second predetermined wavelength but is insensible by light having the first predetermined wavelength;

means for periodically applying pulses of first light of the first predetermined wavelength to the bar code label, wherein a portion of the applied first light is reflected at the bar code label and the reflected portion of the first light forms a first return light;

means for periodically applying pulses of second light of the second predetermined wavelength to the bar code label, wherein a portion of the applied second light is reflected at the bar code label and the reflected portion of the second light forms a second return light;

means for staggering a timing of occurrence of the pulses of the first light and a timing of occurrence of the pulses of the second light; and

means for detecting contents of the first and second bar code symbols in response to the first return light and the second return light.

5. The bar code system of claim 4 wherein the first bar code symbol includes red stripes with a white background and the second bar code symbols includes black stripes with a blue background, and the first and second predetermined wavelengths are equal to 560 nm and 680 nm respectively.

FIG. 1 PRIOR ART

POWER SUPPLY

74

73

72

71

FIG. 2 PRIOR ART

74

77

78

AMP

SIGNAL PROCESSOR

75

76

FIG. 3 PRIOR ART

B1    B2    B3    B4

D

D

C    C

1    0    0    1

# FIG. 4

WAVELENGTH CORRECTING POWER SUPPLY 115

WAVELENGTH CONTROLLING POWER SUPPLY 111

DELAY CIRCUIT 112

113

173

110

MAIN POWER SUPPLY 172

116 SIGNAL GENERATOR

177

178

AMP

SIGNAL PROCESSOR

175

176

CONTROL CIRCUIT

114

F I G . 5

F I G . 6

DRIVE PULSE VOLTAGE

INJECTED CURRENT Id

TIME

F I G . 7

FROM DELAY CIRCUIT 112

FREQ DIV

TO ELEMENT 110

CURRENT SOURCE

# F I G . 8

WHITE/RED

BLUE/BLACK

WHITE/RED

BLUE/BLACK

1        0        0        1   → WHITE/RED

0        1        1        0   → BLUE/BLACK

# F I G . 9

REFLECTIVITY (%)

WHITE

RED

BLUE

BLACK

LIGHT WAVELENGTH (nm)

600        700

12

# F I G. 10

WHITE/RED

BLUE/BLACK

WHITE/RED

BLUE/BLACK

1     0 ⟶ WHITE/RED
0     1 ⟶ BLUE/BLACK

# F I G. 11

WHITE/RED

BLUE/BLACK

WHITE/RED

BLUE/BLACK

1     0 ⟶ WHITE/RED

0     1 ⟶ BLUE/BLACK

# F I G. 12

BLACK

RED

BLUE

|   |   |
|---|---|
| 0 | 1 |
| 1 | 0 |

$\longrightarrow$ WHITE/RED

$\longrightarrow$ BLUE/BLACK

# F I G. 14

DRIVE VOLTAGE
TO ELEMENT 210

DRIVE VOLTAGE
TO ELEMENT 211

$\longrightarrow$ TIME

# FIG. 13